# EUROPÄISCHE PATENTANMELDUNG

(11) **EP 2 835 619 A1**
(43) Veröffentlichungstag der Anmeldung: **11.02.2015**
(21) Anmeldenummer: 14002694.9
(22) Anmeldetag: 01.08.2014
(51) Int. Cl.: G01F 1/58

(54) **Magnetisch-induktiver Durchflussmesser**

(30) Priorität: 09.08.2013 DE 202013007140 U
(71) Anmelder: ABB Technology AG, 8050 Zürich (CH)
(72) Erfinder: Grothey, Harald, 37075 Göttingen (DE); Seebode, Holger, 37083 Göttingen (DE); Brode, Markus, 37085 Göttingen (DE)
(74) Vertreter: Marks, Frank

(57) **Zusammenfassung**

Die Erfindung betrifft einen magnetisch-induktiven Durchflussmesser mit einem Messrohr, an dem eine Magneteinheit zur Erzeugung eines Magnetfeldes angebracht ist, das im Wesentlichen senkrecht zur Fließrichtung eines das Messrohr durchströmenden elektrisch leitfähigen Messmediums ausgerichtet ist und dessen im Messmedium induzierte Messspannung von mindestens zwei elektrisch vom Messrohr isoliert eingesetzte Messelektroden erfassbar ist. Zur Vermeidung der Einkopplung von Störspannungen an den elektrischen Elektroden wird vorgeschlagen, dass die erste und die zweite Elektrodenzuleitung (31, 32) ausgehend von der Durchführung (3) bis zu der ersten Elektrode (21) gemeinsam verdrillt geführt sind, wo die erste Elektrodenzuleitung (31) elektrisch mit der ersten Elektrode (21) verbunden ist und die zweite Elektrode (22) an einer das Messrohr (1) umgreifenden, kurzgeschlossenen Leiterschleife (32') angeschlossen ist, die am Ort der ersten Elektrode (21) mit der zweiten Elektrodenzuleitung (32) verbunden ist.

## Beschreibung

Die Erfindung betrifft einen magnetisch-induktiven Durchflussmesser mit einem Messrohr, an dem eine Magneteinheit zur Erzeugung eines Magnetfeldes angebracht ist, das im Wesentlichen senkrecht zur Fließrichtung eines das Messrohr durchströmenden elektrisch leitfähigen Messmediums ausgerichtet ist und dessen im Messmedium induzierte Messspannung von mindestens zwei elektrisch vom Messrohr isoliert eingesetzte Messelektroden erfassbar ist.

Das Einsatzgebiet der vorliegenden Erfindung erstreckt sich vornehmlich auf die Verfahrenstechnik, insbesondere auf Anwendungen in der chemischen Industrie, der Pharmazie sowie der Kosmetikindustrie, der kommunalen Wasser- und Abwasserwirtschaft, der Nahrungsmittelindustrie und dergleichen. Insbesondere auf diesen technischen Gebieten kommen die gattungsgemäßen Durchflussmesser zur Ermittlung des Volumen- oder Massenstroms von Flüssigkeiten, Breien und Pasten zum Einsatz, welche als Voraussetzung zur Anwendung des magnetisch-induktiven Messprinzips eine bestimmte elektrische Mindestleitfähigkeit aufweisen müssen.

Magnetisch-induktive Durchflussmesser zeichnen sich durch recht genaue Messergebnisse aus, wobei im Rohrleitungssystem durch die Messung kein Druckverlust verursacht wird. Außerdem besitzen magnetisch-induktive Durchflussmesser keine beweglichen oder in das Messrohr hineinragenden Bauteile, welche besonders durch vorbeiströmendes Messmedium einem Verschleiß unterliegen würden.

Das bei der vorliegenden Erfindung verwendete Messprinzip basiert auf dem Faraday'schen Induktionsgesetz, welches besagt, dass in einem sich in einem Magnetfeld bewegenden Leiter eine Spannung induziert wird. Bei der messtechnischen Ausnutzung dieses Naturgesetzes durchfließt das elektrisch leitfähige Messmedium ein Messrohr, in dem senkrecht zur Fließrichtung ein Magnetfeld erzeugt wird. Die im Messmedium induzierte Spannung wird von einer Elektrodenanordnung abgegriffen. Da die so gewonnene Messspannung proportional zur mittleren Fließgeschwindigkeit des strömenden Messmediums ist, kann hieraus der Volumenstrom des Messmediums - oder unter Beachtung der Dichte - dessen Massenstrom bestimmt werden.

Aus der DE 2004 053 065 A1 geht ein gattungsgemäßer magnetisch-induktiver Durchflussmesser hervor. Der Durchflussmesser besteht im Wesentlichen aus einem Messmedium durchströmten Messrohr aus Metall, an dem außen eine Magneteinheit zur Erzeugung des Magnetfeldes senkrecht zur Fließrichtung des Messmediums angeordnet ist. In örtlicher Nähe zu der Magneteinheit ist ein Paar von gegenüberliegend die Wandung des Messrohres durchdringende Messelektroden vorgesehen. Damit das magnetisch-induktive Messprinzip funktioniert, ist das das Messrohr durchströmende Messmedium gegen das aus Metall bestehende Messrohr elektrisch zu isolieren. Da das Messrohr gewöhnlich in eine Rohrleitung eingebunden ist, findet hierüber eine elektrische Erdung statt. Zur elektrischen Isolation ist das Messrohr daher innenwandseitig mit einem elastischen Kunststoff ausgekleidet. Meist ist ein sogenannter Liner ist in das Messrohr eingesetzt und bildet eine dünnwandige elastische Auskleidung, die gewöhnlich auch gegenüber dem Messmedium korrosionsbeständig ist. Das Messrohr wird über beidseitige Flanschabschnitte in die weiterführende Rohrleitung eingebunden.

Das gebildete Durchflusssignal wird am Messmedium berührten Elektroden gemessen. Hierzu sind einstückige oder auch mehrteilige Elektroden für Duchflussmesseinrichtungen bekannt. Neben einer gewünschten Eignung auch für abrasive Medien können entsprechende Materialen verwendet werden.

Aus der DE 196 53 184 A1 ist eine Signalverarbeitungsschaltung für eine solche Durchflussmesseinrichtung bekannt, aus der die Lage der magnetischen und elektrischen Elektroden hervorgeht.

Aus der DE 10 2007 032 879 A1 ist bekannt, die elektrischen Verbindungsleitungen zwischen den Elektroden und den Mitteln zur Messwertverarbeitung durch eine gemeinsame Durchführung in der Verkleidung des Messrohres und auf kürzestem Wege an die Elektroden zu führen. Bei einer solchen Anordnung tritt das Problem auf, dass eine Fläche aufgespannt wird, die durch die geometrische Verbindungslinie zwischen den einander gegenüber liegenden, elektrischen Elektroden und den zu diesen Elektroden führenden Verbindungsleitungen etwa halbkreisflächenförmig begrenzt ist. Ein externes Magnetfeld kann über diese Fläche eine Störspannung induzieren, die die Messpannung verfälscht.

Der Erfindung liegt daher die Aufgabe zugrunde, den bekannten magnetisch-induktiven Durchflussmesser dahingehend weiterzubilden, dass die Einkopplung von Störspannungen an den elektrischen Elektroden weitgehend vermieden wird.

Erfindungsgemäß wird diese Aufgabe mit den Mitteln des Patentanspruchs 1 gelöst.

Die Erfindung geht aus von einem magnetisch-induktiven Durchflussmesser mit einem durch ein Gehäuse verkleideten Messrohr, an dem eine erste Elektrode und gegenüberliegend eine zweite Elektrode angeordnet sind, deren Elektrodenzuleitungen durch eine gemeinsame Durchführung in dem Gehäuse nach außen geführt sind.

Erfindungsgemäß sind die erste und die zweite Elektrodenzuleitung ausgehend von der Durchführung bis zu der ersten Elektrode gemeinsam verdrillt geführt, wo die erste Elektrodenzuleitung elektrisch mit der ersten Elektrode verbunden ist. Die zweite Elektrode ist an einer das Messrohr umgreifenden, kurzgeschlossenen Leiterschleife angeschlossen, die am Ort der ersten Elektrode mit der zweiten Elektrodenzuleitung verbunden ist.

Durch die verdrillte, eng benachbarte Führung der ersten und zweiten Elektrodenzuleitung über die gesamte Länge der ersten Elektrodenzuleitung ist die durch die Elektrodenzuleitungen eingeschlossene wirksame Fläche minimal und darüber hinaus schlagweise entgegengerichtet. Die Fortführung der zweiten Elektrodenzuleitung als Leiterschleife spannt zwar eine vergleichsweise große Fläche auf aber die über diese Fläche induzierte Störspannung wird durch die Leiterschleife kurzgeschlossen. Im Erfolg dieser beiden Maßnahmen ist die Einkopplung von Störspannungen über die Elektrodenzuleitungen messtechnisch nicht mehr nachweisbar.

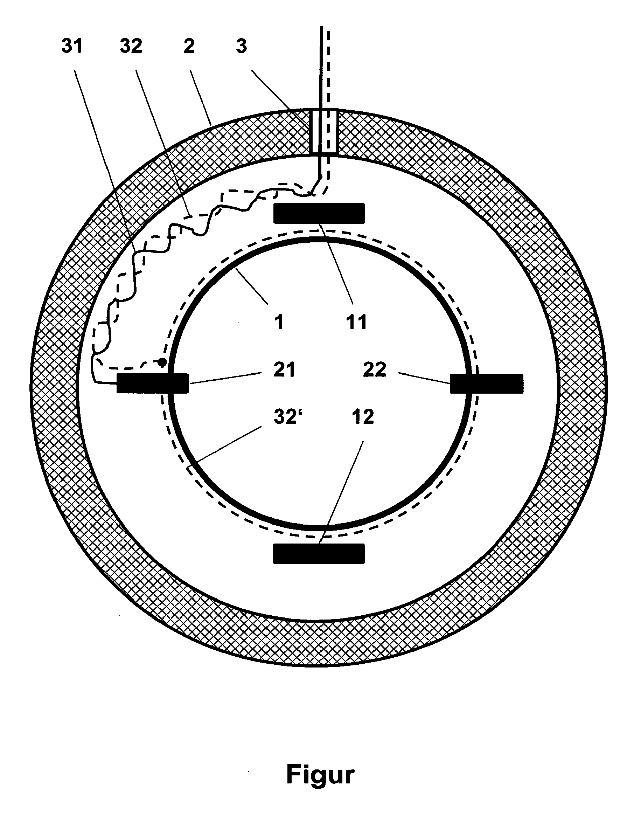

Die Erfindung wird nachstehend anhand eines Ausführungsbeispiels näher erläutert. In der einzigen Figur ist ein magnetisch-induktiver Durchflussmesser im Umfang seiner erfindungswesentlichen Elemente quer zur Strömungsrichtung des Messmediums geschnitten dargestellt. Der magnetisch-induktive Durchflussmesser besteht im Wesentlichen aus einem Messrohr **1**, das mit einem Gehäuse **2** untergebracht ist. Außerhalb des Messrohrs **1** und innerhalb des Gehäuses **2** sind eine erste und eine zweite Spule **11** und **12** derart angeordnet, dass die erste Spule **11** der zweiten Spule **12** gegenüberliegt.

Quer zu den Spulen **11** und **12** sind eine erste und eine zweite Elektrode **21** und **22** derart angeordnet, dass die erste Elektrode **21** der zweiten Elektrode **22** gegenüberliegt. Die geometrische Verbindungslinie der Spulen **11** und **12** kreuzt die geometrische Verbindungslinie der Elektroden **21** und **22** orthogonal auf der Längsachse des Messrohrs **1.**

Die Spulen **11** und **12** sowie die Elektroden **21** und **22** sind mit Hilfe von Verbindungsleitungen mit einer nicht dargestellten Verarbeitungseinrichtung verbunden, die gemeinsam durch eine Durchführung **3** in dem Gehäuse **2** herausgeführt sind, wobei die Verbindungsleitungen zu den magnetischen Elektroden **11** und **12** der besseren Übersicht halber nicht dargestellt sind.

Die Elektroden **21** und **22** sind mit Hilfe einer ersten und einer zweiten Elektrodenzuleitung **31** und **32** mit der nicht dargestellten Verarbeitungseinrichtung verbunden. Zur besseren Unterscheidung ist die zweite Elektrodenzuleitung **32** gestrichelt dargestellt.

Ausgehend von der Durchführung **3** sind die erste und die zweite Elektrodenzuleitung **31** und **32** innerhalb des Gehäuses **2** bis zu der ersten Elektrode **21** gemeinsam verdrillt geführt, wo die erste Elektrodenzuleitung **31** elektrisch mit der ersten Elektrode **21** verbunden ist. Die zweite Elektrode **22** ist an einer das Messrohr **1** umgreifenden, kurzgeschlossenen Leiterschleife **32'** angeschlossen, die am Ort der ersten Elektrode **21** mit der zweiten Verbindungsleitung **32** verbunden ist. Zur besseren Unterscheidung ist die Leiterschleife **32'** gestrichelt dargestellt.

### Bezugszeichenliste

- 1: Messrohr
- 2: Gehäuse
- 3: Durchführung
- 11, 12: Spule
- 21, 22: Elektrode
- 31, 32: Elektrodenzuleitung
- 32': Leiterschleife

## Patentansprüche

1. Magnetisch-induktiver Durchflussmesser mit einem in einem Gehäuse (2) untergebrachten Messrohr (1), an dem eine erste Elektrode (21) und gegenüberliegend eine zweite Elektrode (22) angeordnet sind, deren Elektrodenzuleitungen (31, 32) durch eine gemeinsame Durchführung (3) in dem Gehäuse (2) nach außen geführt sind,
**dadurch gekennzeichnet,**
**dass** die erste und die zweite Elektrodenzuleitung (31, 32) ausgehend von der Durchführung (3) bis zu der ersten Elektrode (21) gemeinsam verdrillt geführt sind, wo die erste Elektrodenzuleitung (31) elektrisch mit der ersten Elektrode (21) verbunden ist und die zweite Elektrode (22) an einer das Messrohr (1) umgreifenden,
kurzgeschlossenen Leiterschleife (32') angeschlossen ist, die am Ort der ersten Elektrode (21) mit der zweiten Elektrodenzuleitung (32) verbunden ist.
